# EUROPÄISCHE PATENTSCHRIFT

(11) **EP 3 222 841 B1**
(45) Veröffentlichungstag und Bekanntmachung des Hinweises auf die Patenterteilung: **17.07.2019**
(21) Anmeldenummer: 17157034.4
(22) Anmeldetag: 21.02.2017
(51) Int. Cl.: F01P 3/02, H02K 1/12, H02K 1/27, H02K 9/19, F02B 63/04

(54) **BRENNKRAFTMASCHINE SOWIE VERFAHREN ZUM BETREIBEN EINER BRENNKRAFTMASCHINE**
COMBUSTION ENGINE AND METHOD FOR OPERATING A COMBUSTION ENGINE
MOTEUR À COMBUSTION INTERNE ET SON PROCÉDÉ DE FONCTIONNEMENT

(30) Priorität: 26.03.2016 DE 102016003803
(43) Veröffentlichungstag der Anmeldung: 27.09.2017
(73) Patentinhaber: Audi AG, 85045 Ingolstadt (DE)
(72) Erfinder: Rothe, Albrecht, 85051 Ingolstadt (DE)

(56) Entgegenhaltungen:
- WO-A1-86/04747
- CN-U- 202 659 339
- JP-A- H03 213 645
- JP-A- H09 303 198
- JP-A- H11 117 779
- JP-U- S5 922 957

## Beschreibung

Die Erfindung betrifft eine Brennkraftmaschine mit wenigstens einem Zylinder, in dem ein Kolben linear verlagerbar gelagert ist, wobei der Kolben über eine Pleuelstange mit einer Kurbelwelle der Brennkraftmaschine wirkverbunden ist. Die Erfindung betrifft weiterhin ein Verfahren zum Betreiben einer Brennkraftmaschine.

Die Brennkraftmaschine dient beispielsweise dem Antreiben eines Kraftfahrzeugs, insoweit also dem Bereitstellen eines auf das Antreiben des Kraftfahrzeugs gerichteten Drehmoments. Die Brennkraftmaschine verfügt über den wenigstens einen Zylinder, vorzugsweise jedoch über mehrere Zylinder. In dem Zylinder beziehungsweise in jedem der Zylinder ist jeweils ein Kolben linear verlagerbar angeordnet. Während des Betriebs werden Kraftstoff sowie ein Oxidator, insbesondere Sauerstoff, beispielsweise in Form von Luftsauerstoff, in den Zylinder beziehungsweise einen Brennraum des Zylinders eingebracht, der von dem Zylinder und dem Kolben gemeinsam begrenzt ist. Der Kraftstoff sowie der Oxidator werden nachfolgend verbrannt, wodurch Gaskräfte entstehen, die eine auf eine Vergrößerung des Brennraums gerichtete Verlagerung des Kolbens bewirken.

Der Kolben ist über die Pleuelstange mit der Kurbelwelle wirkverbunden. Die Kurbelwelle setzt die durch die Gaskräfte bewirkte lineare Bewegung des Kolbens in eine Drehbewegung um. Während eines Arbeitsspiels der Brennkraftmaschine liegt die Pleuelstange beziehungsweise ihre Längsmittelachse unter einem veränderlichen Winkel zu einer Längsmittelachse des Zylinders vor. Das bedeutet jedoch, dass auf den Kolben nicht nur eine den Gaskräften entgegenwirkende, parallel zu der Längsmittelachse des Zylinders verlaufende Längskraft entgegenwirkt, sondern zusätzlich eine Querkraft hervorgerufen wird, die eine Wirkrichtung aufweist, die senkrecht auf der Wirkrichtung der Längskraft steht. In anderen Worten wirkt die Querkraft in radialer Richtung bezüglich der Längsmittelachse des Zylinders auf den Kolben, drängt diesen also in Richtung einer Kolbenlauffläche des Zylinders beziehungsweise an die Kolbenlauffläche. Die Querkraft erhöht insoweit die Reibung des Kolbens an der Kolbenlauffläche und entsprechend die Reibungsverluste der Brennkraftmaschine.

Aus dem Stand der Technik sind beispielsweise die Druckschriften JP 9-303198 A, JP 3-213645 A und JP 11-117779 A bekannt. Erstere beschreibt eine Brennkraftmaschine, bei welcher mittels eines Permanentmagnets und eines Elektromagnets eine senkrecht zu einer Längsmittelachse eines Zylinders wirkende Kraft auf einen in dem Zylinder angeordneten Kolben bewirkt werden kann.

WO86/04747A1 beschreibt eine Brennkraftmaschine, wobei der Kolben als Läufer eines Linearmotors ausgestaltet ist, der zur Unterstützung einer durch Gaskräfte bewirkten linearen Bewegung des Kolbens als Motor oder zur Bewirkung einer den Gaskräften entgegenwirkenden Kraft auf den Kolben als Generator betreibbar ist.

Es ist Aufgabe der Erfindung, eine Brennkraftmaschine vorzuschlagen, welche gegenüber bekannten Brennkraftmaschinen Vorteile aufweist, insbesondere geringere Reibungsverluste erzielt.

Dies wurde erfindungsgemäß mit einer Brennkraftmaschine mit den Merkmalen des Anspruchs 1 erreicht.

Erfindungsgemäß ist es vorgesehen, den Linearmotor in die Brennkraftmaschine zu integrieren und dabei dem Kolben zuzuordnen. Verfügt die Brennkraftmaschine über mehrere Zylinder, so weist wenigstens einer der Zylinder einen solchen Linearmotor auf. Selbstverständlich kann es jedoch auch vorgesehen sein, dass mehrere der Zylinder, insbesondere alle der Zylinder, jeweils mit einem derartigen Linearmotor ausgerüstet sind.

Die Brennkraftmaschine kann eine beliebige Topographie aufweisen. Beispielsweise sind die Zylinder der Brennkraftmaschine auf mehrere Zylinderbänke verteilt. Jede der Zylinderbänke verfügt insoweit über wenigstens einen Zylinder, bevorzugt jedoch mehrere Zylinder. Analog zu den vorstehenden Ausführungen kann nun lediglich eine der Zylinderbänke, also wenigstens einer der Zylinder der Zylinderbank, mit einem derartigen Linearmotor versehen sein. Es können jedoch auch mehrere oder alle Zylinder der Zylinderbank derartig ausgestaltet sein.

Die andere der Zylinderbänke kann ohne Linearmotor vorliegen. Alternativ oder zusätzlich kann es jedoch auch vorgesehen sein, dass wenigstens einer der Zylinder der anderen Zylinderbank mit einem Linearmotor ausgerüstet ist. Auch hier können zudem mehrere oder alle Zylinder der Zylinderbank entsprechend ausgestaltet sein. Nachfolgend wird stets lediglich auf den einen Zylinder und dem ihm zugeordneten Linearmotor eingegangen. Es versteht sich jedoch von selbst, dass die Ausführungen auf mehrere Zylinder und den ihnen jeweils zugeordneten Linearmotor übertragen werden können. Der Linearmotor weist den Läufer und den Stator auf. Der Läufer ist dem Kolben zugeordnet beziehungsweise als Bestandteil von diesem ausgebildet. Der Stator ist dagegen ortsfest bezüglich des Zylinders angeordnet, insbesondere liegt er in einem Zylinderkurbelgehäuse der Brennkraftmaschine vor. Der Linearmotor kann wahlweise als Motor oder als Generator betrieben werden; er kann insoweit alternativ als Linearmaschine bezeichnet werden. Es ist vorgesehen, den Linearmotor entweder zur Unterstützung der Brennkraftmaschine zu verwenden, also das von dieser erzeugbare beziehungsweise bereitstellbare Drehmoment zu erhöhen. In diesem Fall ist ein Betrieb des Linearmotors als Motor realisiert, bei welchem die lineare Bewegung des Kolbens, welche durch die Gaskräfte hervorgerufen wird, unterstützt wird.

Es ist vorgesehen, den Linearmotor als Generator zu betreiben, sodass ein Teil des von der Brennkraftmaschine erzeugten beziehungsweise bereitgestellten Drehmoments von dem Linearmotor zur Bereitstellung von elektrischer Energie genutzt wird. In diesen Fall bewirkt der Linearmotor eine Kraft auf den Kolben, die den Gaskräften entgegengerichtet ist, sodass eine Reduzierung des von der Brennkraftmaschine erzeugten beziehungsweise bereitgestellten Drehmoments erfolgt. Besonders bevorzugt ist eine von mehreren Betriebsarten an der Brennkraftmaschine einstellbar, wobei der Linearmotor in einer ersten der Betriebsarten als Motor und in einer zweiten der Betriebsarten als Generator betrieben wird. Selbstverständlich kann jedoch alternativ ein ausschließlicher Betrieb des Linearmotors als Motor oder als Generator vorgesehen sein.

Der Linearmotor soll derart ausgestaltet sein, dass mit ihm die Ausgleichskraft auf den Kolben aufprägbar ist. Die Ausgleichskraft ist bezüglich der Längsmittelachse des Zylinders in radialer Richtung ausgerichtet. Die Ausgleichskraft stellt dabei bevorzugt eine Komponente der Gesamtkraft dar, die mittels des Linearmotors auf den Kolben aufprägbar ist. Um die Ausgleichskraft, also die in radialer Richtung weisende Komponente der Gesamtkraft, auf den Kolben aufbringen zu können, ist eine spezielle Ausgestaltung des Stators vorgesehen. Hierzu ist das Statorelement des Stators vorgesehen, welches separat betreibbar ist, also unabhängig von eventuell weiteren Statorelement betrieben, insbesondere mit elektrischem Strom beaufschlagt werden kann.

Das Statorelement umgreift den Zylinder in Umfangsrichtung lediglich teilweise. Bei einem Betrieb des Linearmotors, also insbesondere einem Bestromen des Stators oder des separat betreibbaren Statorelements, wird der Kolben in die von dem Stator beziehungsweise dem Statorelement abgewandte Richtung gedrängt. Der Linearmotor kann insoweit beispielsweise dazu genutzt werden, der Querkraft entgegenzuwirken. In diesem Fall wird der Stator beziehungsweise das Statorelement entsprechend angeordnet und zudem der Linearmotor derart betrieben, dass die Ausgleichskraft der Querkraft entspricht, insbesondere hinsichtlich ihrer Amplitude beziehungsweise Größe.

Es ist vorgesehen, dass das Statorelement als ein in Umfangsrichtung verlaufendes Statorsegment vorliegt, wobei der Stator wenigstens ein in Umfangsrichtung benachbart zu dem Statorelement angeordnetes weiteres Statorsegment aufweist. Das Statorelement stellt also lediglich ein Segment des Stators dar, sodass neben dem Statorelement wenigstens ein weiteres Statorsegment vorliegt. Das weitere Statorsegment liegt benachbart zu dem Statorelement beziehungsweise Statorsegment vor. Beispielsweise liegt es unmittelbar benachbart zu diesem vor, schließt sich also in Umfangsrichtung gesehen unmittelbar an dieses an. Das Statorelement und wenigstens eine weitere Statorsegment können also in Umfangsrichtung voneinander beabstandet sein oder unmittelbar aneinander angrenzen.

Es kann vorgesehen sein, dass das Statorsegment und das wenigstens eine weitere Statorsegment den Zylinder in Umfangsrichtung vollständig umgreifen. Dabei ist jedoch das Statorsegment vollständig unabhängig von dem weiteren Statorsegment betreibbar. Zum Aufprägen der Ausgleichskraft wird insoweit das Statorsegment betrieben, während ansonsten - beispielsweise wenn das Aufprägen nicht beabsichtig ist - zusätzlich oder alternativ das wenigstens eine weitere Statorsegment betrieben wird. Beispielsweise kann es vorgesehen sein, dass das Statorsegment und das wenigstens eine weitere Statorsegment mit unterschiedlichen Spannungen und/oder Stromstärken beaufschlagt werden, um die gewünschte Ausgleichskraft zu realisieren. Insgesamt ist es also möglich, nur das Statorelement beziehungsweise Statorsegment, nur das weitere Statorsegment oder sowohl das Statorelement als auch das weitere Statorsegment zu betreiben, um die gewünschte Wirkung des Linearmotors zu erzielen.

Eine bevorzugte weitere Ausgestaltung der Erfindung sieht vor, dass der Stator in einem den Zylinder aufweisenden Zylinderkurbelgehäuse der Brennkraftmaschine angeordnet ist. Das Zylinderkurbelgehäuse weist hierzu eine entsprechende Aufnahme für den Stator auf. Diese wird beispielsweise beim Gießen des Zylinderkurbelgehäuses ausgebildet und nachfolgend der Stator in die Aufnahme eingesetzt. Selbstverständlich kann es jedoch auch vorgesehen sein, dass der Stator in das Zylinderkurbelgehäuse eingegossen wird.

Eine Weiterbildung der Erfindung sieht vor, dass der Zylinder in Umfangsrichtung wenigstens teilweise von einem Wassermantel umgeben ist und der Stator in radialer Richtung zwischen dem Wassermantel und einer Kolbenlauffläche des Zylinders angeordnet ist. Der Wassermantel dient der Kühlung der Brennkraftmaschine, insbesondere des Zylinderkurbelgehäuses. Der Wassermantel umgreift den Zylinder in Umfangsrichtung wenigstens teilweise, bevorzugt größtenteils, insbesondere vollständig. Der Wassermantel wird zumindest während eines Betriebs der Brennkraftmaschine von einem Kühlmittel, beispielsweise Kühlwasser, durchströmt, sodass während des Betriebs der Brennkraftmaschine anfallende Wärme abgeführt wird.

Um den magnetischen Fluss zwischen dem Stator und dem Läufer des Linearmotors möglichst optimal zu gestalten, ist der Stator in radialer Richtung zwischen dem Wassermantel und der Kolbenlauffläche angeordnet. Unter der Kolbenlauffläche ist dabei eine Innenumfangsfläche des Zylinders zu verstehen, entlang welcher der Kolben linear verlagerbar ist. Weist der Kolben wenigstens einen Kolbenring auf, so kann der Kolbenring zumindest zeitweise in Berührkontakt mit der Kolbenlauffläche stehen beziehungsweise auf dieser gleiten.

Eine weitere bevorzugte Ausgestaltung der Erfindung sieht vor, dass der Zylinder in Umfangsrichtung wenigstens teilweise von einem weiteren Wassermantel umgeben ist und der Stator in axialer Richtung benachbart zu dem weiteren Wassermantel, insbesondere unterhalb des weiteren Wassermantels, angeordnet ist. Der weitere Wassermantel kann unabhängig von dem Wassermantel mit Kühlmittel beaufschlagbar sein. In axialer Richtung gesehen grenzt der weitere Wassermantel an den Wassermantel an. Alternativ ist er in axialer Richtung von ihm beabstandet. In radialer Richtung gesehen überlappen der Wassermantel und der weitere Wassermantel vorzugsweise wenigstens teilweise, insbesondere lediglich teilweise oder vollständig. Bevorzugt überlappt der weitere Wassermantel in radialer Richtung gesehen sowohl den Wassermantel als auch den Stator. Der weitere Wassermantel ist bevorzugt oberhalb des Wassermantels angeordnet. Das bedeutet bevorzugt, dass der weitere Wassermantel auf der der Kurbelwelle abgewandten Seite des Wassermantels angeordnet ist. Entsprechend liegt der Stator unterhalb des weiteren Wassermantels vor.

Eine weitere Ausgestaltung der Erfindung sieht vor, dass das Statorelement zumindest teilweise, insbesondere vollständig, auf einer Seite einer gedachten Ebene angeordnet ist, die die Längsmittelachse des Zylinders in sich aufnimmt und parallel zu einer Drehachse der Kurbelwelle angeordnet ist. Die Längsmittelachse des Zylinders liegt also in der gedachten Ebene. Gleichzeitig verläuft diese parallel zu der Drehachse der Kurbelwelle. Besonders bevorzugt nimmt sie die Drehachse in sich auf. Die auf einer ersten Seite der Ebene liegende Seite kann nun beispielsweise als Druckseite und die der Druckseite gegenüberliegende Seite als Gegendruckseite bezeichnet werden. Unter der Druckseite ist diejenige Seite zu verstehen, in welche der Kolben während des Betriebs der Brennkraftmaschine in einem Arbeitstakt aufgrund der den Gaskräften entgegenwirkenden Gegenkraft gedrängt wird. Das Statorelement ist wenigstens teilweise auf einer Seite der gedachten Ebene angeordnet. Insbesondere liegt es vollständig auf dieser Seite vor. Besonders bevorzugt ist zudem eine symmetrische Anordnung des Statorelements bezüglich der Ebene, bei welcher das Statorelement beiderseits in Umfangsrichtung gleichweit von der Ebene entfernt ist.

Eine bevorzugte Weiterbildung der Erfindung sieht vor, dass eine auf der Ebene senkrecht stehende Querkraft, die aufgrund von während eines Verbrennungstakts auftretenden Gaskräften auf den Kolben einwirkt, von einer Gegendruckseite der Ebene in Richtung einer Druckseite der Ebene weist, wobei das Statorelement auf der Druckseite angeordnet ist. Hierauf wurde vorstehend bereits hingewiesen. Das Statorelement ist besonders bevorzugt vollständig auf der Druckseite angeordnet, insbesondere symmetrisch bezüglich der Ebene. Durch einen Betrieb des Linearmotors kann der Querkraft entgegengewirkt werden, besonders bevorzugt wird diese vollständig ausgeglichen. Dies ermöglicht einen besonders reibungsarmen Betrieb der Brennkraftmaschine.

Schließlich kann in einer weiteren Ausführungsform der Erfindung vorgesehen sein, dass der Läufer wenigstens einen Permanentmagnet aufweist oder als Kurschlussläufer ausgebildet ist. Grundsätzlich kann der Linearmotor beziehungsweise dessen Läufer beliebig ausgestaltet sein. Beispielsweise ist der Linearmotor als permanenterregter Linearmotor ausgeführt, wozu der Läufer den Permanentmagnet aufweist. Alternativ kann der Linearmotor als selbsterregter Linearmotor ausgeführt sein. Hierzu ist beispielsweise der Kurzschlussläufer vorgesehen beziehungsweise der Läufer als Kurzschlussläufer ausgestaltet.

Gemäß dem Anspruch 8 betrifft die Erfindung weiterhin ein Verfahren zum Betreiben einer Brennkraftmaschine.

Auf die Vorteile einer derartigen Ausgestaltung der Brennkraftmaschine beziehungsweise einer derartigen Vorgehensweise wurde bereits hingewiesen. Sowohl das Verfahren als auch die Brennkraftmaschine können gemäß den vorstehenden Ausführungen weitergebildet sein, sodass insoweit auf diese verwiesen wird.

Es kann im Rahmen einer weiteren Ausführungsform der Erfindung vorgesehen sein, dass der Linearmotor zumindest zeitweise derart betrieben wird, dass die Ausgleichskraft einer Querkraft entgegenwirkt, die aufgrund von während eines Verbrennungstakts auftretenden Gaskräften auf den Kolben einwirkt. Auch hierauf wurde bereits hingewiesen.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Querschnittsdarstellung durch einen Bereich einer Brennkraftmaschine, wobei einem Kolben der Brennkraftmaschine ein Linearmotor zugeordnet ist, und
- Figur 2: eine schematische Darstellung der Brennkraftmaschine, in welcher anhand mehrerer Zylinder unterschiedliche Ausgestaltungen des Linearmotors gezeigt sind.

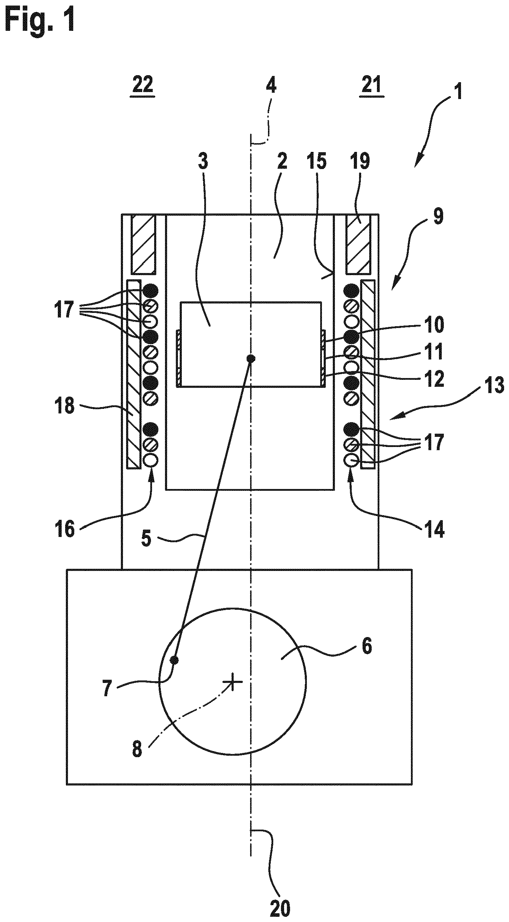

Die Figur 1 zeigt eine schematische Querschnittsdarstellung eines Bereichs einer Brennkraftmaschine 1. Diese weist wenigstens einen Zylinder 2 auf, in welchem ein Kolben 3 linear verlagerbar angeordnet ist, insbesondere in axialer Richtung bezüglich einer Längsmittelachse 4 des Zylinders 2. Der Kolben 3 ist über eine Pleuelstange 5 mit einer Kurbelwelle 6, insbesondere mit einem Hubzapfen 7 der Kurbelwelle 6, wirkverbunden. Die Kurbelwelle 6 ist um eine Drehachse 8 drehbar gelagert. Die Drehachse 8 kann, muss jedoch nicht die Längsmittelachse 4 schneiden. Vielmehr kann sie - wie hier dargestellt - windschief zu dieser angeordnet sein. Die Pleuelstange 5 greift bevorzugt einerseits unmittelbar an dem Kolben 3 und andererseits bevorzugt unmittelbar an der Kurbelwelle 6 beziehungsweise dem Hubzapfen 7 an. Über die Pleuelstange 5 ist somit eine unmittelbare Verbindung zwischen dem Kolben 3 und der Kurbelwelle 6 realisiert.

Dem Zylinder 2 ist ein Linearmotor 9 zugeordnet. Zu diesem Zweck ist der Kolben 3 als Läufer des Linearmotors 9 ausgebildet. Er weist hierzu wenigstens einen Permanentmagnet 10, in dem hier dargestellten Ausführungsbeispiel mehrere Permanentmagneten 10, 11 und 12 auf. Der Permanentmagnet 10 beziehungsweise die Permanentmagneten 10, 11 und 12 umgreifen den Kolben 3 in Umfangsrichtung bezüglich der Längsmittelachse 4 vorzugsweise vollständig.

Der Linearmotor 9 verfügt weiterhin über einen Stator 13, der zumindest ein Statorelement 14 aufweist. Das Statorelement 14 ist unabhängig betreibbar und umgreift den Zylinder 2 in Umfangsrichtung lediglich teilweise. Es ist bevorzugt an den Zylinder 2 formangepasst, weist also eine Krümmung auf, sodass es an unterschiedlichen Positionen in Umfangsrichtung stets denselben Abstand in radialer Richtung zu einer Kolbenlauffläche 15 des Zylinders 2 aufweist. Das Statorelement 14 ist bevorzugt als Statorsegment ausgestaltet.

Neben dem Statorelement 14 kann wenigstens ein weiteres Statorsegment 16 vorgesehen sein. Das weitere Statorsegment 16 schließt sich bevorzugt in Umfangsrichtung gesehen unmittelbar an das Statorelement 14 an, zumindest einseitig, insbesondere jedoch beidseitig.
Das bedeutet, dass das Statorelement 14 und das Statorsegment 16 den Zylinder 2 in Umfangsrichtung gemeinsam vollständig umgreifen. Dabei können sich das Statorelement 14 und das Statorsegment 16 in Umfangrichtung auch überlappen.

Sowohl das Statorelement 14 als auch das Statorsegment 16 setzten sich jeweils aus einer Vielzahl von Wicklungen 17 zusammen, von welchen hier lediglich einige beispielhaft gekennzeichnet sind. Die Wicklungen 17 des Statorelements 14 sind dabei jedoch unabhängig von den Wicklungen 17 des Statorsegments 16 mit elektrischem Strom beaufschlagbar, sodass das Statorelement 14 unabhängig von dem Statorsegment 16 betreibbar ist.

Zur Kühlung der Brennkraftmaschine 1 ist der Zylinder 2 in Umfangsrichtung wenigstens teilweise, insbesondere vollständig, von einem Wassermantel 18 umgeben. Der Stator 13, insbesondere das Statorelement 14 und/oder das Statorsegment 16, sind nun in radialer Richtung zwischen dem Wassermantel 18 und der Kolbenlauffläche 15 angeordnet. Oberhalb des Wassermantels 18 liegt ein weiterer Wassermantel 19 vor. Dieser kann gemeinsam mit dem Wassermantel 18 oder unabhängig von diesem mit Kühlmittel, insbesondere Kühlwasser, beaufschlagbar sein. Der Wassermantel 19 übergreift im Querschnitt gesehen den Wassermantel 18 und/oder den Stator 13 jeweils zumindest teilweise, insbesondere jeweils vollständig. Mit Hilfe der Wassermäntel 18 und 19 kann eine ausreichende Kühlung der Brennkraftmaschine 1 sichergestellt werden und zudem auch eine Kühlung des Linearmotors 9 vorgenommen werden.

Der Zylinder 2 wird von einer gedachten Ebene 20 aufgeteilt, die die Längsmittelachse 4 des Zylinders 2 in sich aufnimmt und parallel zu der Drehachse 8 der Kurbelwelle 6 angeordnet ist oder diese ebenfalls in sich aufnimmt. Auf einer Seite der Ebene 20 liegt nun eine Druckseite 21 und auf der gegenüberliegenden Seite eine Gegendruckseite 22 vor. Während eines Betriebs der Brennkraftmaschine 1 wird der Kolben 3 von auf ihn wirkenden Gaskräften beziehungsweise von einer den Gaskräften entgegen gerichteten, über die Pleuelstange 5 auf ihn aufgeprägten Gegenkraft in Richtung der Druckseite 21 gedrängt. Eine Komponente der Gegenkraft, welche dies bewirkt, wird als Querkraft bezeichnet. Ein Kraftvektor der Querkraft steht senkrecht auf der Ebene 20 (hier nicht dargestellt).

Dieser Querkraft soll durch entsprechendes Betreiben des Linearmotors 9 entgegengewirkt werden. Insbesondere wird hierzu das Statorelement 14 des Stators 13 betrieben, also mit elektrischem Strom beaufschlagt. Dies kann intermittierend erfolgen, sodass die mittels des Linearmotors 9 erzeugte Ausgleichskraft, welche der Gegenkraft entgegengerichtet ist, umso stärker ist, je stärker die Querkraft auf den Kolben 3 einwirkt. Das bedeutet ganz allgemein, dass das Statorelement 14 in lediglich einem Teil des Arbeitsspiels der Brennkraftmaschine 1 betrieben wird oder zumindest anders betrieben wird als das wenigstens eine weitere Statorsegment 16. Auch kann das Statorelement 14 in dem Kurbelwellenbereich anders betrieben werden als außerhalb des Kurbelwellenbereichs, insbesondere also mit einer anderen Leistung. Hierbei kann grundsätzlich der Linearmotor 9 entweder als Motor oder als Generator betrieben werden. Der Linearmotor 9 kann beispielsweise derart betrieben werden, dass eine Glättung des von der Brennkraftmaschine 1 bereitgestellten beziehungsweise erzeugten Drehmoments erfolgt.

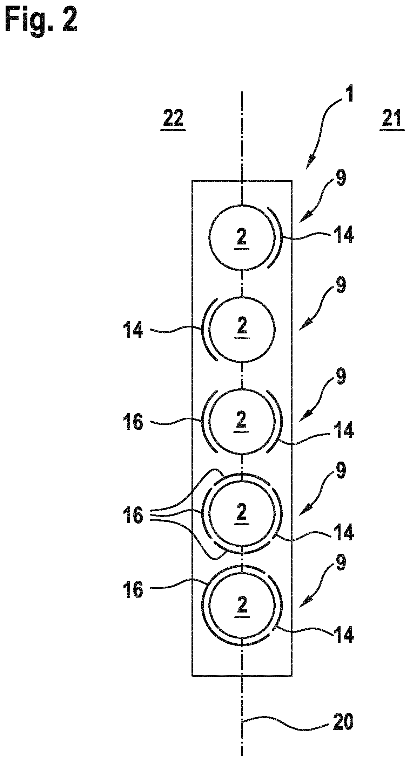

Die Figur 2 zeigt eine schematische Darstellung der Brennkraftmaschine 1. Gezeigt sind mehrere Zylinder 2, welche jeweils unterschiedliche Ausgestaltungen des Linearmotors 9 zugeordnet sind. So sind von oben nach unten fünf Zylinder 2 mit drei verschiedenen Ausführungen des Linearmotors 9 gezeigt. Grundsätzlich weist jedoch die Brennkraftmaschine 1 vorzugsweise lediglich einen Typ des Linearmotors 9 auf, sodass also allen Zylindern 2 jeweils der gleiche Linearmotor 9 zugeordnet ist. Es können jedoch auch unterschiedliche Typen des Linearmotors 9 derselben Brennkraftmaschine 1 zugeordnet sein.

In dem ersten Beispiel des Linearmotors 9 ist lediglich das Statorelement 14 vorgesehen. Dieses umgreift den Zylinder 2 in Umfangsrichtung nur teilweise. Dabei ist es auf der Druckseite 21 angeordnet. In dem zweiten Beispiel ist dagegen das Statorelement 14 auf der Gegendruckseite 22 vorgesehen. Die Ausführungsform des dritten Zylinders weist wiederum neben dem Statorelement 14 das Statorsegment 16 auf, wobei das Statorelement 14 auf der Druckseite 21 und das Statorsegment 16 auf der Gegendruckseite 22 vorliegt. Das Statorelement 14 und das Statorsegment 16 weisen in Umfangsrichtung dieselbe Erstreckung auf und sind dabei symmetrisch bezüglich der Ebene 20 angeordnet.

Die Ausführungsform des vierten Zylinders des Linearmotors 9 weist neben dem Statorelement 14 mehrere Statorsegmente 16, in dem hier dargestellten Ausführungsbeispiel drei Statorsegmente 16 auf. Das Statorelement 14 und die Statorsegmente 16 weisen in Umfangsrichtung jeweils dieselbe Erstreckung auf und sind gleichmäßig über den Umfang des Zylinders 2 verteilt angeordnet. Die Ausführungsform des fünften Zylinders verfügt über das Statorelement 14 und genau ein Statorsegment 16. Während das Statorelement 14 ausschließlich auf der Druckseite 21 vorliegt, erstreckt sich das Statorsegment 16 über die gesamte Gegendruckseite 22 bis auf die Druckseite 21, insbesondere lediglich einseitig oder (wie hier dargestellt) beidseitig. Das Statorsegment 16 grenzt insoweit vorzugsweise zumindest einseitig, insbesondere beidseitig, unmittelbar an das Statorelement 14 an.

Mittels der hier beschriebenen Brennkraftmaschine 1 mit dem integrierten Linearmotor 9 kann die während des Betriebs der Brennkraftmaschine 1 auf den Kolben 3 wirkende Querkraft zumindest teilweise, besonders bevorzugt vollständig, ausgeglichen werden. Dies ermöglicht einen reibungsarmen Betrieb der Brennkraftmaschine 1 und somit eine hohe Effizienz.

## Patentansprüche

1. Brennkraftmaschine (1) mit wenigstens einem Zylinder (2), in dem ein Kolben (3) linear verlagerbar gelagert ist, wobei der Kolben (3) über eine Pleuelstange (5) mit einer Kurbelwelle (6) der Brennkraftmaschine (1) wirkverbunden ist, wobei der Kolben (3) als Läufer eines Linearmotors (9) ausgestaltet ist, der zur Unterstützung einer durch Gaskräfte bewirkten linearen Bewegung des Kolbens (3) als Motor oder zur Bewirkung einer den Gaskräften entgegenwirkenden Kraft auf den Kolben (3) als Generator betreibbar ist, wobei der Linearmotor (9) einen Stator (13) mit einem dem Zylinder (2) zugeordneten Statorelement (14) aufweist, das den Zylinder (2) in Umfangsrichtung bezüglich einer Längsmittelachse (4) des Zylinders (2) teilweise umgreift und dass das Statorelement (14) als ein in Umfangsrichtung verlaufendes Statorsegment vorliegt und der Stator (13) wenigstens ein in Umfangsrichtung benachbart zu dem Statorelement (14) angeordnetes weiteres Statorsegment (16) aufweist, **dadurch gekennzeichnet, dass** das Statorelement (14) zur zumindest zeitweisen Aufprägung einer in radialer Richtung gerichteten Ausgleichskraft auf den Kolben (3) mittels des Linearmotors (9) unabhängig von dem wenigstens einen weiteren Statorsegment (16) betreibbar ist.

2. Brennkraftmaschine nach Anspruch 1, **dadurch gekennzeichnet, dass** der Stator (13) in einem den Zylinder (2) aufweisenden Zylinderkurbelgehäuse der Brennkraftmaschine (1) angeordnet ist.

3. Brennkraftmaschine nach einem der vorhergehenden Ansprüche, **dadurch gekennzeichnet, dass** der Zylinder (2) in Umfangsrichtung wenigstens teilweise von einem Wassermantel (18) umgeben ist und der Stator (13) in radialer Richtung zwischen dem Wassermantel (18) und einer Kolbenlauffläche (15) des Zylinders (2) angeordnet ist.

4. Brennkraftmaschine nach einem der vorhergehenden Ansprüche, **dadurch gekennzeichnet, dass** der Zylinder (2) in Umfangsrichtung wenigstens teilweise von einem weiteren Wassermantel (19) umgeben ist und der Stator (13) in axialer Richtung benachbart zu dem weiteren Wassermantel (19), insbesondere unterhalb des weiteren Wassermantels (19), angeordnet ist.

5. Brennkraftmaschine nach einem der vorhergehenden Ansprüche, **dadurch gekennzeichnet, dass** das Statorelement (14) zumindest teilweise, insbesondere vollständig, auf einer Seite einer gedachten Ebene (20) angeordnet ist, die die Längsmittelachse (4) des Zylinders (2) in sich aufnimmt und parallel zu einer Drehachse (8) der Kurbelwelle (6) angeordnet ist.

6. Brennkraftmaschine nach einem der vorhergehenden Ansprüche, **dadurch gekennzeichnet, dass** eine auf der Ebene (20) senkrecht stehende Querkraft, die aufgrund von während eines Verbrennungstakts auftretenden Gaskräften auf den Kolben (3) einwirkt, von einer Gegendruckseite (22) der Ebene (20) in Richtung einer Druckseite (21) der Ebene (20) weist, wobei das Statorelement (14) auf der Druckseite (21) angeordnet ist.

7. Brennkraftmaschine nach einem der vorhergehenden Ansprüche, **dadurch gekennzeichnet, dass** der Läufer wenigstens einen Permanentmagnet (10,11,12) aufweist oder als Kurzschlussläufer ausgebildet ist.

8. Verfahren zum Betreiben einer Brennkraftmaschine (1), insbesondere einer Brennkraftmaschine (1) nach einem oder mehreren der vorhergehenden Ansprüche, wobei die Brennkraftmaschine (1) wenigstens einen Zylinder (2) aufweist, in dem ein Kolben (3) linear verlagerbar gelagert ist, wobei der Kolben (3) über eine Pleuelstange (5) mit einer Kurbelwelle (6) der Brennkraftmaschine (1) wirkverbunden ist, wobei der Kolben (3) als Läufer eines Linearmotors (9) ausgestaltet ist, der zur Unterstützung einer durch Gaskräfte bewirkten linearen Bewegung des Kolbens (3) als Motor oder zur Bewirkung einer den Gaskräften entgegenwirkenden Kraft auf den Kolben (3) als Generator betreibbar ist, wobei der Linearmotor (9) einen Stator (13) mit einem dem Zylinder (2) zugeordneten Statorelement (14) aufweist, das den Zylinder (2) in Umfangsrichtung bezüglich einer Längsmittelachse (4) des Zylinders (2) teilweise umgreift und dass das Statorelement (14) als ein in Umfangsrichtung verlaufendes Statorsegment vorliegt und der Stator (13) wenigstens ein in Umfangsrichtung benachbart zu dem Statorelement (14) angeordnetes weiteres Statorsegment (16) aufweist, **dadurch gekennzeichnet, dass** das Statorelement (14) zum Aufprägen einer in radialer Richtung gerichteten Ausgleichskraft auf den Kolben (3) mittels des Linearmotors (9) unabhängig von dem wenigstens einen weiteren Statorsegment (16) betreibbar ist, wobei der Linearmotor (9) zumindest zeitweise zum Aufprägen der Ausgleichskraft betrieben wird.

9. Verfahren nach Anspruch 8, **dadurch gekennzeichnet, dass** der Linearmotor (9) zumindest zeitweise derart betrieben wird, dass die Ausgleichskraft einer Querkraft entgegenwirkt, die aufgrund von während eines Verbrennungstakts auftretenden Gaskräften auf den Kolben (3) einwirkt.

## Claims

1. Combustion engine (1) having at least one cylinder (2) in which a piston (3) is supported in a linearly displaceable manner, wherein the piston (3) is operatively connected via a connecting rod (5) with a crankshaft (6) of the combustion engine (1), wherein the piston (3) is formed as a rotor of a linear motor (9) which, to support a linear movement of the piston (3) carried out by means of gas forces, is operable as a motor, or for inducing a force opposing the gas forces on the piston (3) is operable as a generator, wherein the linear motor (9) has a stator (13) having a stator element (14) assigned to the cylinder (2), which partially encloses the cylinder (2) in circumferential direction with respect to a longitudinal central axis (4) of the cylinder (2) and that the stator element (14) is present as a stator segment extending in circumferential direction and the stator (13) has at least one further stator segment (16) disposed in circumferential direction adjacent to the stator element (14), **characterised in that** the stator element (14) for the at least temporary imprinting of a compensatory force, directed in radial direction, on the piston (3) is operable by means of the linear motor (9) independently of the at least one further stator segment (16).

2. Combustion engine according to claim 1, **characterised in that** the stator (13) is disposed in a cylinder crankcase, having the cylinder (2), of the combustion engine (1).

3. Combustion engine according to any of the preceding claims, **characterised in that** the cylinder (2) in circumferential direction is enclosed at least partially by a water jacket (18) and the stator (13) is disposed in radial direction between the water jacket (18) and a piston running surface (15) of the cylinder (2).

4. Combustion engine according to any of the preceding claims, **characterised in that** the cylinder (2) is enclosed in circumferential direction at least partially by a further water jacket (19) and the stator (13) is disposed in axial direction adjacent to the further water jacket (19), in particular below the further water jacket (19).

5. Combustion engine according to any of the preceding claims, **characterised in that** the stator element (14) is disposed at least partially, in particular completely on one side of an imaginary plane (20), which includes the longitudinal central axis (4) of the cylinder (2) and is disposed parallel to a rotational axis (8) of the crankshaft (6).

6. Combustion engine according to any of the preceding claims, **characterised in that** a lateral force being perpendicular to the plane (20), which acts on the piston (3) by reason of gas forces occurring during a combustion cycle, points from a counter pressure side (22) of the plane (20) in the direction of a pressure side (21) of the plane (20), wherein the stator element (14) is disposed on the pressure side (21).

7. Combustion engine according to any of the preceding claims, **characterised in that** the rotor has at least one permanent magnet (10, 11, 12) or is formed as a short-circuit rotor.

8. Method for operating a combustion engine (1), in particular a combustion engine (1) according to one or more of the preceding claims, wherein the combustion engine (1) has at least one cylinder (2) in which a piston (3) is supported in a linearly displaceable manner, wherein the piston (3) is operatively connected via a connecting rod (5) with a crankshaft (6) of the combustion engine (1), wherein the piston (3) is formed as a rotor of a linear motor (9) which, to support a linear movement of the piston (3) carried out by means of gas forces, is operable as a motor or, for achieving a force, opposing the gas forces, on the piston (3), is operable as a generator, wherein the linear motor (9) has a stator (13) having a stator element (14) assigned to the cylinder (2), which partially encloses the cylinder (2) in circumferential direction with respect to a longitudinal central axis (4) of the cylinder (2) and that the stator element (14) is present as a stator segment extending in circumferential direction and the stator (13) has at least one further stator segment (16) disposed in circumferential direction adjacent to the stator element (14), **characterised in that** the stator element (14) for the imprinting of a compensatory force, directed in radial direction, on the piston (3) is operable by means of the linear motor (9) independently of the at least one further stator segment (16), wherein the linear motor (9) is operated at least temporarily for imprinting the compensatory force.

9. Method according to claim 8, **characterised in that** the linear motor (9) is at least temporarily operated such that the compensatory force opposes a lateral force, which acts on the piston (3) by reason of gas forces occurring during a combustion cycle.

## Revendications

1. Moteur à combustion interne (1) avec au moins un vérin (2), dans lequel un piston (3) est logé linéairement déplaçable, dans lequel le piston (3) est relié fonctionnellement à un arbre de manivelle (6) du moteur à combustion interne (1) par le biais d'une bielle (5), dans lequel le piston (3) est configuré en tant que rotor d'un moteur linéaire (9), qui peut fonctionner, pour soutenir un déplacement linéaire du piston (3) provoqué par des forces des gaz, en tant que moteur, ou pour appliquer une force contrecarrant les forces des gaz sur le piston (3), en tant que générateur, dans lequel le moteur linéaire (9) présente un stator (13) avec un élément de stator (14) associé au vérin (2), qui vient en prise en partie autour du vérin (2) dans la direction circonférentielle par rapport à un axe médian longitudinal (4) du vérin (2) et que l'élément de stator (14) est présent en tant que segment de stator s'étendant dans la direction circonférentielle et le stator (13) présente au moins un autre segment de stator (16) agencé dans la direction circonférentielle de manière adjacente à l'élément de stator (14), **caractérisé en ce que** l'élément de stator (14) peut fonctionner pour l'application au moins temporaire d'une force de compensation dirigée dans la direction radiale sur le piston (3) au moyen du moteur linéaire (9) indépendamment de l'au moins un autre segment de stator (16).

2. Moteur à combustion interne selon la revendication 1, **caractérisé en ce que** le stator (13) est agencé dans un carter de manivelle de vérin présentant le vérin (2) du moteur à combustion interne (1).

3. Moteur à combustion interne selon l'une quelconque des revendications précédentes, **caractérisé en ce que** le vérin (2) est entouré dans la direction circonférentielle au moins en partie par une enveloppe d'eau (18) et le stator (13) est agencé dans la direction radiale entre l'enveloppe d'eau (18) et la surface de roulement de piston (15) du vérin (2).

4. Moteur à combustion interne selon l'une quelconque des revendications précédentes, **caractérisé en ce que** le vérin (2) est entouré dans la direction circonférentielle au moins en partie par une autre enveloppe d'eau (19) et le stator (13) est agencé dans la direction axiale de manière adjacente à l'autre enveloppe d'eau (19), en particulier sous l'autre enveloppe d'eau (19).

5. Moteur à combustion interne selon l'une quelconque des revendications précédentes, **caractérisé en ce que** l'élément de stator (14) est agencé au moins en partie, en particulier complètement, sur un côté d'un plan imaginaire (20), qui contient l'axe médian longitudinal (4) du vérin (2) et est agencé parallèlement à un axe de rotation (8) de l'arbre de manivelle (6).

6. Moteur à combustion interne selon l'une quelconque des revendications précédentes, **caractérisé en ce qu'**une force transversale verticale au plan (20), qui agit en raison de forces de gaz apparaissant pendant un cycle de combustion sur le piston (3), est dirigé d'un côté de contre-pression (22) du plan (20) en direction d'un côté de pression (21) du plan (20), dans lequel l'élément de stator (14) est agencé sur le côté de pression (21).

7. Moteur à combustion interne selon l'une quelconque des revendications précédentes, **caractérisé en ce que** le rotor présente au moins un aimant permanent (10, 11, 12) ou est réalisé en tant que rotor en court-circuit.

8. Procédé de fonctionnement d'un moteur à combustion interne (1), en particulier d'un moteur à combustion interne (1) selon l'une ou plusieurs des revendications précédentes, dans lequel le moteur à combustion interne (1) présente au moins un vérin (2), dans lequel un piston (3) est logé linéairement déplaçable, dans lequel le piston (3) est relié fonctionnellement à un arbre de manivelle (6) du moteur à combustion interne (1) par le biais d'une bielle (5), dans lequel le piston (3) est configuré en tant que rotor d'un moteur linéaire (9), qui peut fonctionner, pour soutenir un déplacement linéaire provoqué par des forces des gaz du piston (3), en tant que moteur, ou pour appliquer une force contrecarrant les forces des gaz sur le piston (3), en tant que générateur, dans lequel le moteur linéaire (9) présente un stator (13) avec un élément de stator (14) associé au vérin (2), qui vient en prise en partie autour du vérin (2) dans la direction circonférentielle par rapport à un axe médian longitudinal (4) du vérin (2) et que l'élément de stator (14) est présent en tant que segment de stator s'étendant dans la direction circonférentielle et le stator (13) présente au moins un autre segment de stator (16) agencé dans la direction circonférentielle de manière adjacente à l'élément de stator (14), **caractérisé en ce que** l'élément de stator (14) peut fonctionner pour l'application d'une force de compensation sur le piston (3) dirigée dans la direction radiale au moyen du moteur linéaire (9) indépendamment de l'au moins un autre segment de stator (16), dans lequel le moteur linéaire (9) fonctionne au moins en partie pour l'application de la force de compensation.

9. Procédé selon la revendication 8, **caractérisé en ce que** le moteur linéaire (9) fonctionne au moins temporairement de sorte que la force de compensation contrecarre une force transversale, qui agit en raison de forces de gaz apparaissant pendant un cycle de combustion sur le piston (3).
